# EUROPÄISCHE PATENTSCHRIFT

(11) **EP 0 869 153 B1**
(45) Veröffentlichungstag und Bekanntmachung des Hinweises auf die Patenterteilung: **12.01.2005**
(21) Anmeldenummer: 98103213.9
(22) Anmeldetag: 24.02.1998
(51) Int. Cl.: C08L 101/00

(54) **Mischungen aus Duroplasten und oxidierten Polyarylensulfiden**
Mixtures of thermosetting polymers and oxidised polyarylene sulfides
Mélanges de polymères thermodurcissables et de poly(sulfure d'arylènes)oxydés

(30) Priorität: 06.03.1997 DE 19709035
(43) Veröffentlichungstag der Anmeldung: 07.10.1998
(73) Patentinhaber: Ticona GmbH, 65451 Kelsterbach (DE)
(72) Erfinder: Scheckenbach, Helmut, Dl., 63225 Langen (DE)

(56) Entgegenhaltungen:
- EP-A- 0 194 232
- EP-A- 0 275 991
- EP-A- 0 583 224
- EP-A- 0 633 291
- EP-A- 0 801 109
- DATABASE WPI Section Ch, Week 8917 Derwent Publications Ltd., London, GB; Class A26, AN 89-125343 XP002078097 & JP 01 069657 A (TORAY IND INC) , 15. März 1989

## Beschreibung

Die Erfindung betrifft Mischungen aus Duroplasten und unschmelzbaren oxidierten Polyarylensulfiden, insbesondere Polyarylensulfonen oder teilweise oxidierten Polyarylensulfiden, die S-, SO- oder SO₂-Brückenglieder, jedoch kein polyethersulfon, enthalten, und ihre Verwendung zur Herstellung geformter Kunststoffteile.

Duroplaste sind seit längerer Zeit bekannt. Sie zeichnen sich durch eine leichte Verarbeitbarkeit und gute elektrische Eigenschaften aus. Das breite Eigenschaftsspektrum macht sie für viele Anwendungen zum idealen Werkstoff. Von Nachteil ist jedoch häufig das tribologische Verhalten dieser Werkstoffgruppe.

Zur Verbesserung der tribologischen Eigenschaften von Duroplasten werden vor allem anorganische Füllstoffe wie Quarzmehl verwendet. Dies wirkt sich jedoch nachteilig auf die Chemikalienbeständigkeit aus.

DE 4323181 A1 (=EP-A 0 633 290) und DE 4323121 A1 (=EP-A-0 633 291) beschreiben Mischungen von Fluorpolymeren und oxidierten Polyarylensulfiden, wobei das Abriebverhalten der Fluorpolymere durch den Zusatz von oxidierten Polyarylensulfiden verbessert wird.
Die europäische Patentanmeldung EP-A-0 801 109 beschreibt Mischungen aus Thermoplasten und oxidierten Polyarylensulfiden, wobei das Abriebverhalten der Thermoplaste durch den Zusatz von oxidierten Polyarylensulfiden verbessert wird.

Die Erfindung betrifft Polymermischungen, die mindestens einen Duroplasten (A) und mindestens ein unschmelzbares oxidiertes Polyarylensulfid (B), jedoch kein polyethersulfon, enthalten. Der Anteil des Duroplasten an der Polymermischung beträgt im allgemeinen 10 bis 99,9 Gew.-%, vorzugsweise 50 bis 99 Gew.-%, insbesondere 80 bis 99 Gew.-%. Der Anteil des oxidierten Polyarylensulfids an der Polymermischung beträgt im allgemeinen 0,1 bis 90 Gew.-%, vorzugsweise 1 bis 50 Gew.-%, insbesondere 1 bis 20 Gew.-%.

Es wurde gefunden, daß der Zusatz von oxidierten Polyarylensulfiden, insbesondere Polyarylensulfonen, zu Duroplasten deren tribologisches Verhalten verbessert. Dies ist überraschend, da Duroplaste sich physikalisch und chemisch gänzlich anders als Thermoplaste verhalten. So sind Thermoplaste Kunststoffe, die sich nach dem Verarbeitungsschritt wieder aufschmelzen lassen, während Duroplaste nach der Verarbeitung zu Formteilen nicht mehr schmelzbar sind.

Unter Duroplasten werden Polymere verstanden, die aus einem härtbaren Harz-Härter-Gemisch bestehen und die nach dem Aushärten nicht mehr schmelzbar sind. Diese sind wohlbekannt und werden beispielsweise beschrieben in Ullmann's Encyclopedia of Industrial Chemistry, VCH Verlagsgesellschaft mbH, Weinheim-New York, worauf Bezug genommen wird. Hierzu gehören beispielsweise Alkydharze, Volume A1, S. 409-424; Phenolharze, Volume A19, S. 371-387; Harnstoff-Formaldehyd und Melaminformaldehyd, Volume A2, S. 115-142; ungesättigte Polyesterharze, Volume A21, S. 217-226; Epoxidharze, Volume A9, S. 547-563; härtbare Silikonharze, Volume A24, S. 57-94; Duroplaste, Volume A26, S. 665-679. Duroplaste werden beispielsweise ebenfalls beschrieben in Vieweg/Becker, Kunststoffhandbuch Band X, Carl-Hanser-Verlag, München worauf Bezug genommen wird.

Polyarylensulfide und deren Herstellung sind in Ullmann's Encyclopedia of Industrial Chemistry, Volume A21, B. Elvers, S. Hawkins und G. Schulz (Eds.), VCH, Weinheim-New York 1992, S. 463-472 beschrieben, worauf Bezug genommen wird. Die Synthese von sulfongruppenhaltigen Polyarylensulfiden ist in Chimia 28(9), (1974) 567 beschrieben, worauf ebenfalls Bezug genommen wird.

Oxidierte Polyarylensulfide sind lineare oder verzweigte Polyarylensulfide, deren Schwefelgruppen teilweise oder vollständig in Sulfoxid- und/oder Sulfongruppen überführt worden sind. Oxidierte Polyarylensulfide und deren Herstellung werden in den deutschen Patentanmeldungen DE 43 14 737 und DE 43 14 738 beschrieben, worauf Bezug genommen wird. Oxidierte Polyarylensulfide im Sinne der Erfindung sind Polyarylensulfone, Polyarylensulfoxid-sulfone, Polyarylensulfid-sulfone und Polyarylensulfid-sulfoxid-sulfone, wobei im allgemeinen mindestens 10%, bevorzugt mindestens 30% und besonders bevorzugt mindestens 60% der Schwefelbrücken in Sulfonbrücken umgewandelt sind. Besonders bevorzugte oxidierte Polyarylensulfide sind oxidierte Polyphenylensulfide.

Oxidierte Polyarylensulfide sind besonders wärme- und chemikalienstabil und unter den Bedingungen einer duroplastischen Verarbeitung sehr stabil. Die oxidierten Polyarylensulfide verhalten sich wie Füllstoffe in den Duroplasten, d. h. sie schmelzen nicht auf.

Die mittlere Teilchengröße (d₅₀-Wert) der oxidierten Polyarylensulfide gemäß der Erfindung liegt im allgemeinen im Bereich von 0,1 bis 500 µm, vorzugsweise 1 bis 300 µm und insbesondere 5 bis 50 µm.

Die Mischungen gemäß der Erfindung werden aus den Einzelkomponenten nach Standardmethoden in hierfür geeigneten Mischern hergestellt und anschließend nach bekannten Verfahren (z.B. Gießen, Duroplast-Spritzguß, Spritzpressen) verarbeitet.

Die Mischungen gemäß der Erfindung können übliche Additive enthalten, wie thermische Stabilisatoren, UV-Stabilisatoren, Antistatika, Flammschutzmittel, Farbstoffe, Pigmente, anorganische und/oder organische Füllstoffe sowie Gleitmittelzusätze wie Molybdändisulfid, Graphit oder Polytetrafluorethylen.

Gleitmittelzusätze zu den Mischungen sorgen für eine niedrigere Reibungszahl. Vorteilhaft ist oft die Kombination von niedrigem Abrieb und niedriger Reibungszahl.

Die Mischungen werden vorteilhaft als Werkstoffe in Anwendungen eingesetzt, die einen geringen Abrieb und ein geringes Kriechverhalten fordern, wie Gleitlager oder Dichtungsmaterialien, sowie als Umhüllungs- bzw. Verpackungsmaterial für elektronische Bauteile.

Die Mischungen eignen sich zur Herstellung geformter Kunststoffteile wie Zahnräder, Zahnstangen, Lager, Ketten, Rollen, Räder oder Dichtungen.

### Beispiele:

### Herstellung von Polyphenylensulfon (PPSO₂):

63 kg Polyphenylensulfid-Pulver (d₅₀-Wert: 20 µm) mit einer Tg von 94°C und einem Tm von 290°C wurden in 219 l Eisessig bei 50°C vorgelegt, 1,2 l konz. Schwefelsäure zugegeben und 91 kg Wasserstoffperoxid (50%) über 3 h zugetropft, wobei sich die Temperatur auf 60-65°C erhöhte. Nach einer Nachrührzeit von 2 h bei 65°C und 1 h bei 80°C wurde die Reaktionslösung abgekühlt, bei 50°C abgesaugt, mit Wasser gewaschen und getrocknet. Ausbeute: 70 kg; DSC-Daten: Tg: 352°C, Tm: 520°C (Zersetzung)
Elementaranalyse: (C₆H₄SO₂)ₙ; C: 55,6%, H: 3,2%, S: 24,6%, O: 16,0%. Dies entspricht einem Schwefel-Oxidationsgrad im Polymer von etwa 65%.

Die Mischungsbestandteile Duroplast (A), bestehend aus Harz und Härter, und Polyphenylensulfon (B) wurden bei Raumtemperatur mittels eines Rührgeräts miteinander gemischt und anschließend unter den für den Duroplasten üblichen Bedingungen zu 4 mm dicken Platten verarbeitet. Aus den gehärteten Platten wurden mittels einer Säge Prüfkörper entnommen. An den Prüfkörpern wurden unmittelbar nach der Herstellung die tribologischen Eigenschaften gemessen.

Die tribologischen Kenndaten wurden auf einem Stift-Scheibe-Prüfstand bestimmt. Hierbei wird ein Prüfstift in eine Halterung am unteren Ende eines Biegebalkens eingespannt. Am Biegebalken sind Dehnungsmeßstreifen für die Messung der Normalkraft und Reibkraft angebracht. Die Gewichte zur Erzeugung der Normalkraft werden am oberen Ende des Biegebalkens befestigt. Der Prüfstift wird senkrecht auf eine sich drehende Reibscheibe aus gehärtetem Stahl (100 Cr 6, Rockwellhärte HRC > 50) gedrückt. Die Oberflächenrauhigkeit der Reibscheibe wird vor jedem Versuch gemessen. Die Reibgeschwindigkeit wird konstant eingestellt. Durch den Verschleiß des Kunststoffstifts an der Reibfläche senkt sich dieser mit dem Biegebalken ab. Die Absenkung wird mit einem induktiven Wegaufnehmer gemessen. Die Meßdaten werden online erfaßt und können mit einem Computer ausgewertet werden.

### 1. Mischungen aus Epoxidharzen (EP) und PPSO₂:

Als EP wurde Araldit CW 2215, ein mit 60% Mineral gefülltes EP-Harz, Araldit CY 219 ein ungefülltes EP-Harz, Araldit HY 5161 ein ungefüllter EP-Härter verwendet. Alle Araldite sind erhältlich bei Ciba-Geigy GmbH, Wehr/Baden, BR Deutschland.

Als PPSO₂ wurde das unter Herstellung von Polyphenylensulfon (PPSO₂) genannte Produkt verwendet. Die mittlere Korngröße betrug 20 µm.

Es wurden folgende Mischungen hergestellt an denen folgende tribologischen Kenndaten ermittelt wurden:

| Mischungs-Nr. | Rezeptur | Verschleißkoeffizient* [10⁻⁶mm³/m] | Reibungszahl* [-] |
|---|---|---|---|
| A1 | 100 Teile Araldit CW 2215 | 318 | 0,50 |
| | 20 Teile Araldit HY 5161 | | |
| A2 | 100 Teile Araldit CW 2215 | 230 | 0,45 |
| | 4,4 Teile Araldit CY 219 | | |
| | 22,2 Teile Araldit HY 5161 | | |
| | 6,6 Teile PPSO₂ | | |
| A3 | 100 Teile Araldit CW 2215 | 163 | 0,34 |
| | 10 Teile Araldit CY 219 | | |
| | 25 Teile Araldit HY 5161 | | |
| | 15 Teile PPSO₂ | | |
| A4 | 100 Teile Araldit CY 219 | 130 | 0,44 |
| | 50 Teile Araldit HY 5161 | | |
| | 20 Teile PPSO₂ | | |
| A5 | 100 Teile Araldit CY 219 | 121 | 0,38 |
| | 50 Teile Araldit HY 5161 | | |
| | 100 Teile PPSO₂ | | |

| | | | |
|---|---|---|---|
| * Gleitgeschwindigkeit: 0,5 m/s, Flächenpressung: 1 N/mm², mittlere Rauhtiefe: 0,7 µm | | | |

### 2. Mischungen aus Phenolharzen (PF) und PPSO₂:

Als PF wurde Bakelit PF 1150 ein gefülltes PF-Harz der Bakelit GmbH, Iserlohn-Letmathe, BR Deutschland, verwendet.

Als PPSO₂ wurde das unter Herstellung von Polyphenylensulfon (PPSO₂) genannte Produkt verwendet. Die mittlere Korngröße betrug 20 µm.

Es wurden folgende Mischungen hergestellt an denen folgende tribologischen Kenndaten ermittelt wurden:

| Mischungs-Nr. | Rezeptur | Verschleißkoeffizient* [10⁻⁶mm³/m] |
|---|---|---|
| B1 | 100 Teile Bakelit PF 1150 | 240 |
| B2 | 100 Teile Bakelit PF 1150 | 130 |
| | 5 Teile PPSO₂ | |
| B3 | 100 Teile Bakelit PF 1150 | 110 |
| | 10 Teile PPSO₂ | |
| B4 | 100 Teile Bakelit PF 1150 | 105 |
| | 20 Teile PPSO₂ | |

| | | |
|---|---|---|
| * Gleitgeschwindigkeit: 0,5 m/s, Flächenpressung: 1 N/mm², mittlere Rauhtiefe: 0,7 µm | | |

### 3. Mischungen aus Melaminformaldehyd (MF) und PPSO₂:

Als MF wurde Meloplas HT, ein mit Gesteinsmehl gefülltes MF-Harz der Ciba-Geigy Marienberg GmbH, Bensheim, BR Deutschland, verwendet.

Als PPSO₂ wurde das unter Herstellung von Polyphenylensulfon (PPSO₂) genannte Produkt verwendet. Die mittlere Korngröße betrug 20 µm.

Es wurden folgende Mischungen hergestellt an denen folgende tribologischen Kenndaten ermittelt wurden:

| Mischungs-Nr. | Rezeptur | Verschleißkoeffizient* [10⁻⁶mm³/m] |
|---|---|---|
| C1 | 100 Teile Meloplas HT | 315 |
| C2 | 100 Teile Meloplas HT | 250 |
| | 5 Teile PPSO₂ | |
| C3 | 100 Teile Meloplas HT | 195 |
| | 10 Teile PPSO₂ | |
| C4 | 100 Teile Meloplas HT | 180 |
| | 20 Teile PPSO₂ | |

| | | |
|---|---|---|
| * Gleitgeschwindigkeit: 0,5 m/s, Flächenpressung: 1 N/mm², mittlere Rauhtiefe: 0,7 µm | | |

### 4. Mischungen aus ungesättigtem Polyesterharz (UP) und PPSO₂:

Als UP wurde Ampal PM 350, ein mit Cellulose und Gesteinsmehl gefülltes UP-Harz der Ciba-Geigy Marienberg GmbH, Bensheim, BR Deutschland, verwendet.

Als PPSO₂ wurde das unter Herstellung von Polyphenylensulfon (PPSO₂) genannte Produkt verwendet. Die mittlere Korngröße betrug 20 µm.

Es wurden folgende Mischungen hergestellt an denen folgende tribologischen Kenndaten ermittelt wurden:

| Mischungs-Nr. | Rezeptur | Verschleißkoeffizient* [10⁻⁶mm³/m] |
|---|---|---|
| D1 | 100 Teile Ampal PM 350 | 234 |
| D2 | 100 Teile Ampal PM 350 | 184 |
| | 5 Teile PPSO₂ | |
| D3 | 100 Teile Ampal PM 350 | 155 |
| | 10 Teile PPSO₂ | |
| D4 | 100 Teile Ampal PM 350 | 132 |
| | 20 Teile PPSO₂ | |

| | | |
|---|---|---|
| * Gleitgeschwindigkeit: 0,5 m/s, Flächenpressung: 1 N/mm², mittlere Rauhtiefe: 0,7 µm | | |

## Patentansprüche

1. Polymermischung, die mindestens einen Duroplasten, mindestens ein unschmelzbares oxidiertes Polyarylensulfid sowie gegebenfalls Additive, jedoch kein Polyethersulfon, enthält.

2. Polymermischung nach Anspruch 1, **dadurch gekennzeichnet, daß** zur Herstellung des Duroplasten Alkydharze, Phenolharze, ungesättigte Polyesterharze, Epoxidharze, härtbare Silikonharze, Harnstoff-Formaldehyd oder Melaminformaldehyd verwendet wird.

3. Polymermischung nach Anspruch 1 oder 2, **dadurch gekennzeichnet, daß** als oxidiertes Polyarylensulfid mindestens ein oxidiertes oder teiloxidiertes Polyarylensulfid oder ein Polyarylensulfon verwendet wird, wobei mindestens 10 %, bevorzugt mindestens 30 % und besonders bevorzugt mindestens 60 % der Schwefelbrücken in Sulfonbrücken umgewandelt sind.

4. Polymermischung nach einem oder mehreren der Ansprüche 1 bis 3, **dadurch gekennzeichnet, daß** als Polyarylensulfid Polyphenylensulfid verwendet wird.

5. Polymermischung nach einem oder mehreren der Ansprüche 1 bis 4, **dadurch gekennzeichnet, daß** sie 0,1 bis 90 Gew.-%, bevorzugt 1 bis 50 Gew.-%, besonders bevorzugt 1 bis 20 Gew.-% oxidiertes Polyarylensulfid enthält.

6. Polymermischung nach einem oder mehreren der Ansprüche 1 bis 5, **dadurch gekennzeichnet, daß** die Polymermischung als Additive thermische Stabilisatoren, UV-Stabilisatoren, Antistatika, Flammschutzmittel, Farbstoffe, Pigmente, anorganische oder organische Füllstoffe enthält.

7. Polymermischung nach einem oder mehren der Ansprüche 1 bis 6, **dadurch gekennzeichnet, daß** die Polymermischung Gleitmittel, vorzugsweise Molybdändisulfid, Graphit oder Polytetrafluorethylen enthält.

8. Verwendung der Polymermischung gemäß einem oder mehreren der Ansprüche 1 bis 7 zur Herstellung geformter Kunststoffteile.

9. Verwendung der Polymermischung gemäß einem oder mehreren der Ansprüche 1 bis 7 zur Herstellung von Zahnrädern, Zahnstangen, Lagern, Ketten, Rollen, Rädern oder Dichtungsmaterialien.

## Claims

1. A polymer mixture comprising at least one thermoset, at least one infusible oxidized polyarylene sulfide and, if appropriate, additives, but no polyether sulfone.

2. The polymer mixture as claimed in claim 1, wherein the thermoset is prepared using alkyd resins, phenolic resins, unsaturated polyester resins, epoxy resins, curable silicone resins, urea-formaldehyde or melamine-formaldehyde.

3. The polymer mixture as claimed in claim 1 or 2, wherein at least one oxidized or partially oxidized polyarylene sulfide or a polyarylene sulfone is used as oxidized polyarylene sulfide, at least 10%, preferably at least 30% and, with particular preference, at least 60% of the sulfur bridges having been converted to sulfone bridges.

4. The polymer mixture as claimed in one or more of claims 1 to 3, wherein polyphenylene sulfide is used as polyarylene sulfide.

5. The polymer mixture as claimed in one or more of claims 1 to 4, which comprises from 0.1 to 90% by weight, preferably from 1 to 50% by weight and, with particular preference, from 1 to 20% by weight of oxidized polyarylene sulfide.

6. The polymer mixture as claimed in one or more of claims 1 to 5, which comprises heat stabilizers, UV stabilizers, antistats, flame retardants, dyes, pigments, inorganic or organic fillers as additives.

7. The polymer mixture as claimed in one or more of claims 1 to 6, which comprises lubricants, preferably molybdenum disulfide, graphite or polytetrafluoroethylene.

8. The use of the polymer mixture as claimed in one or more of claims 1 to 7 for producing shaped plastic parts.

9. The use of the polymer mixture as claimed in one or more of claims 1 to 7 for producing gearwheels, gear racks, bearings, chains, rollers, wheels or gasket materials.

## Revendications

1. Mélange de polymères contenant au moins un polymère thermodurcissable, au moins un poly(sulfure d'arylène) oxydé ainsi qu'éventuellement des additifs, mais ne contient pas de polyéthersulfone.

2. Mélange de polymères selon la revendication 1, **caractérisé en ce que** pour la préparation des polymères thermoplastiques on utilise des résines alkyde, des résines phénoliques, des résines polyester insaturé, des résines époxy, des résines silicones durcissables, des résines urée-formaldéhyde ou mélamine-formaldéhyde.

3. Mélange de polymères selon la revendication 1 ou 2, **caractérisé en ce qu'**on utilise en tant que poly(sulfure d'arylène) oxydé au moins un poly(sulfure d'arylène oxydé ou partiellement oxydé ou une polyarylènesulfone, au moins 10 %, de préférence au moins 30 % et de façon particulièrement préférée au moins 60 % des ponts constitués d'atomes de soufre étant transformés en ponts sulfone.

4. Mélange de polymères selon une ou plusieurs des revendications 1 à 3, **caractérisé en ce qu'**on utilise en tant que poly(sulfure d'arylène) du poly(sulfure de phénylène).

5. Mélange de polymères selon une ou plusieurs des revendications 1 à 4, **caractérisé en ce qu'**il contient de 0,1 à 90 % en poids, de préférence de 1 à 50 % en poids, de façon particulièrement préférée de 1 à 20 % en poids de poly(sulfure d'arylène).

6. Mélange de polymères selon une ou plusieurs des revendications 1 à 5, **caractérisé en ce que** le mélange de polymères contient en tant qu'additifs des stabilisants thermiques, des stabilisants UV, des agents antistatiques, des agents ignifuges, des colorants, des pigments, des charges organiques ou minérales.

7. Mélange de polymères selon une ou plusieurs des revendications 1 à 6, **caractérisé en ce que** le mélange de polymères contient des lubrifiants, de préférence du disulfure de molybdène, du graphite ou du polytétrafluoroéthylène.

8. Utilisation du mélange de polymères selon une ou plusieurs des revendications 1 à 7, pour la fabrication de pièces en matière plastique.

9. Utilisation du mélange de polymères selon une ou plusieurs des revendications 1 à 7, pour la fabrication de roues dentées, de crémaillères, de paliers, de chaînes, de rouleaux, de roues ou de matériaux d'étanchéité.
